# EUROPEAN PATENT SPECIFICATION

(11) **EP 4 473 446 B1**
(45) Date of publication and mention of the grant of the patent: **26.08.2026**
(21) Application number: 22728123.5
(22) Date of filing: 05.05.2022
(51) Int. Cl.: G06N 3/006, G06N 20/00, G06N 7/01, G06N 3/092, G06N 3/045, G06N 3/08, G08G 1/0967, G08G 1/16

(54) **CENTRALISED AND DECENTRALISED MULTI-AGENT SYSTEMS**
SWITCHING BETWEEN CENTRALISED AND DECENTRALISED CRITIC IN MULTI-AGENT SYSTEMS
SYSTÈMES À MULTIPLES AGENTS CENTRALISÉS ET DÉCENTRALISÉS

(43) Date of publication of application: 11.12.2024
(73) Proprietor: Huawei Technologies Co., Ltd., Shenzhen, Guangdong 518129 (CN)
(72) Inventor: JAFFERJEE, Taher, 80992 Munich (DE); MGUNI, David, 80992 Munich (DE)
(74) Representative: Pfenning, Meinig & Partner mbB
(86) International application number: PCT/EP2022/062192
(87) International publication number: WO 2023/213403

(56) References cited:
- US-A1- 2020 160 168
- WU YUANYUAN ET AL: "DCL-AIM: Decentralized coordination learning of autonomous intersection management for connected and automated vehicles", TRANSPORTATION RESEARCH PART C:EMERGING TECHNOLOGIES, vol. 103, 30 June 2019 (2019-06-30), pages 246 - 260, XP085690786, ISSN: 0968-090X, DOI: 10.1016/J.TRC.2019.04.012
- JIACHEN YANG ET AL: "CM3: Cooperative Multi-goal Multi-stage Multi-agent Reinforcement Learning", ARXIV.ORG, CORNELL UNIVERSITY LIBRARY, 201 OLIN LIBRARY CORNELL UNIVERSITY ITHACA, NY 14853, 13 September 2018 (2018-09-13), XP081082882
- DAVID MGUNI ET AL: "MANSA: Learning Fast and Slow in Multi-Agent Systems", ARXIV.ORG, CORNELL UNIVERSITY LIBRARY, 201 OLIN LIBRARY CORNELL UNIVERSITY ITHACA, NY 14853, 3 March 2023 (2023-03-03), XP091451675
- ZHI ZHANG ET AL: "Integrating independent and centralized multi-agent reinforcement learning for traffic signal network optimization", ARXIV.ORG, CORNELL UNIVERSITY LIBRARY, 201 OLIN LIBRARY CORNELL UNIVERSITY ITHACA, NY 14853, 24 September 2019 (2019-09-24), XP081480849

## Description

### TECHNICAL FIELD

This invention relates to multi-agent reinforcement learning (MARL), and more specifically to a device comprising a control module and a method of training a switching machine learning algorithm.

### BACKGROUND

One approach to multi-agent reinforcement learning is to perform centralised learning with decentralised execution (CT-DE). This approach can provide certain benefits of the centralised learning method for solving multi-agent systems, while allowing actors to execute their actions using only local observations. Multi-agent systems (MASs) modelled in this way may involve coordination among agents. However, centralised learning is typically computationally expensive and can often require large numbers of samples to complete training. Recent results have indicated that in some settings centralised learning can hinder learning. There are cases in which centralised learning is greatly outperformed by independent learning (IL) algorithms. IL algorithms typically learn quickly and are easy to tune.

Independent learning algorithms have other disadvantages, however. First, they do not explicitly account for the actions of other agents. Unlike single agent reinforcement learning (RL), in MASs the collective of agents is typically required to coordinate to successfully solve the task. For independent learning methods, the presence of other RL agents that are not accounted for produces the appearance of a non-stationary environment from the perspective of a given agent. This degrades the strength of the algorithm because it causes convergence guarantees to be lost.

A second issue for IL algorithms is that they are unable to distinguish between (i) randomness due to the stochasticity of the modelled environment and (ii) randomness produced by the explorative actions of RL agents. This hinders the ability of independent learning methods to learn optimal policies in some environments. As a result, in the MARL domain there are some settings in which independent learners perform well and other settings where centralised learning (CL) is found necessary to learn to solve multi-agent systems. It is not well understood how to determine in advance which of these algorithms is best suited to a given task. Moreover, in a given system, independent learners may perform well in some parts while failing badly elsewhere.

One difficulty in implementing MARL algorithms is their high sample complexity. Early MARL algorithms such as QMIX (see "QMIX: Monotonic Value Function Factorisation for Deep Multi-Agent Reinforcement Learning", Rashid et al., 2018) have been out-performed recently by algorithms such as MAPPO (see "Is Independent Learning All You Need in the StarCraft Multi-Agent Challenge?", de Witt et al., 2021). QMIX typically imposes strong conditions on the structure of the system rewards which guide learning. However, these conditions are often violated, which in turn causes QMIX to fail. This can be interpreted as QMIX simply underperforming in comparison to MAPPO. More generally, QMIX has a number of aspects that differ to MAPPO which may cause differences in performance. However, it has been suggested that this outperformance is a consequence of MAPPO being an overall stronger algorithm than QMIX rather than that MAPPO is specifically better adapted to high sample complexity.

Another difficulty in implementing MARL algorithms is that they can exhibit sub-optimal convergence. This has been documented the prior art cited above and in "Multi-agent reinforcement learning: Independent vs. cooperative agents", Tan et al., 1993. These papers indicate that centralised training - decentralised execution MARL algorithms can fail in some multiagent settings where IL MARL algorithms succeed. Conversely, there are some settings where the opposite is true. The MARL algorithms detailed in the above papers and in "The Surprising Effectiveness of PPO in Cooperative Multi-Agent Games", Velu et al., 2021 are unable to identify when it is more beneficial to use CT-DE or IL methods. Approaches that rely exclusively on centralised MARL are likely to fail in situations where independent learning is more advantageous than centralisation.

Document ZHI ZHANG ET AL, "Integrating independent and centralized multi-agent reinforcement learning for traffic signal network optimization", ARXIV.ORG, CORNELL UNIVERSITY LIBRARY, 201 OLIN LIBRARY CORNELL UNIVERSITY ITHACA, NY 14853,24 September 2019 (2019-09-24), XP081480849 describes a multi-agent reinforcement learning algorithm that combines the advantages of independent and centralized learning.

Document WU YUANYUAN ET AL: "DCL-AIM: Decentralized coordination learning of autonomous intersection management for connected and automated vehicles", TRANSPORTATION RESEARCH PART C:EMERGING TECHNOLOGIES, vol. 103 , pages 246-260, XP085690786, ISSN: 0968-090X, DOI: 10.1016/J.TRC.2019.04.012 describes an autonomous intersection management method in which the sequential movements of vehicles through intersections are modelled as multi-agent Markov decision processes in which vehicle agents cooperate to minimize intersection delay with collision-free constraints.

Document US 2020/160168 A1 describes a method for cooperative multi-goal, multi-agent, multi-stage reinforcement learning.

Document JIACHEN YANG ET AL: "CM3: Cooperative Multi-goal Multi-stage Multi-agent Reinforcement Learning", ARXIV.ORG, CORNELL UNIVERSITY LIBRARY, 201 OLIN LIBRARY CORNELL UNIVERSITY ITHACA, NY 14853, 13 September 2018 (2018-09-13), XP081082882 describes a deep reinforcement learning method for cooperative multi-agent problems where agents must coordinate for joint success in achieving different individual goals.

There is a need for an improved approach to MARL that can determine when it's better to use independent learning over centralised learning and vice versa. Such an approach might allow an efficient and effective method to be selected for any given situation. Furthermore, it would be advantageous to have an approach to MARL that addressed the typically low sample efficiency of MARL and/or the risk of MARL converging on suboptimal solutions.

### SUMMARY

The invention is set out in the appended set of claims.

According to one aspect there is provided a device comprising a control module, the control module configured to implement a policy for performing one or more tasks optimised according to a switching machine learning algorithm; the switching machine learning algorithm trained according to a multi-critic learning framework, the multi-critic learning framework comprising a centralised critic and a decentralised critic, where the switching machine learning algorithm controls switching between the centralised critic and the decentralised critic for deducing one or more actions to be performed by one or more agents within an environment, and wherein the one or more tasks comprise at least one of autonomous driving and swarm robotics. Further, the one or more agents can move on orthogonal roads of a traffic junction, a state of the environment consists of locations of the one or more agents on the roads at any given time, each agent's action at an iteration is to either move forward or stand still, and a reward function rewards forward movement of an agent and penalises accidents where the roads intersect; wherein the switching machine learning algorithm comprises an adaptive reinforcement learning machine learning algorithm; wherein the switching machine learning algorithm is arranged to determine a group of states of the environment in which the one or more actions deduced by the centralised critic result in a greater expected reward than the one or more actions deduced by the decentralised critic; wherein the policy for performing one or more tasks is optimised to perform tasks according to the one or more actions deduced by the decentralised critic unless the current state belongs to the determined group of states in which the one or more actions deduced by the centralised critic result in a greater expected reward than the one or more actions deduced by the decentralised critic; wherein the adaptive reinforcement learning machine learning algorithm uses a switching control mechanism with which it learns to activate the centralised critic only at the group of states of the environment in which the one or more actions deduced by the centralised critic result in a greater expected reward than the one or more actions deduced by the decentralised critic; and wherein the decentralised critic is used if the centralised critic is not activated.

The switching machine learning algorithm comprises an adaptive reinforcement learning agent. This may provide for an effective solution in certain input situations.

The switching machine learning algorithm is arranged to determine a group of states of the environment in which the one or more actions deduced by the centralised critic result in a greater expected reward than the one or more actions deduced by the decentralised critic. In this way it may guide the selection of an appropriate algorithm in a given situation.

The switching machine learning algorithm may be arranged to determine a group of states of the environment where one or more actions deduced by the decentralised critic result in a greater expected reward than the one or more actions deduced by the centralised critic. This may assist the switching machine learning algorithm to efficiently select a preferred algorithm for certain states.

The policy for performing one or more tasks is optimised to perform tasks according to the one or more actions deduced by the decentralised critic unless the current state belongs to the determined group of states in which the one or more actions deduced by the centralised critic result in a greater expected reward than the one or more actions deduced by the decentralised critic. This may allow the effectiveness of the decentralised critic to be assessed or preserved unless the centralised critic is observed to perform in an advantageous way for certain states.

According to a second aspect there is provided a method of training a switching machine learning algorithm for generating a policy for performing one or more tasks to be executed by the control module of the device according to the previous aspect, wherein the one or more tasks comprise at least one of autonomous driving and swarm robotics, the method comprising: providing the current state of the environment to the switching machine learning algorithm; selecting by the switching machine learning algorithm either the centralised or decentralised critic for use in deducing the one or more actions; inputting the current state into the selected critic; evaluating an action output by the selected critic to determine an expected reward associated with the next state as a consequence of executing the action; and providing the current state, the selected critic, and the expected reward to the switching machine learning algorithm.

The method may comprise providing the current state, the deduced action, and the expected reward for the next state to the respective selected critic. This can assist in identifying a preferred solution.

The method may comprise providing the current state, the deduced action, and the expected reward for the next state to both the centralised and decentralised critic irrespective of which critic deduced the action. This can assist in identifying a preferred solution.

The method may comprise training the switching machine learning algorithm with the adaptive reinforcement learning machine learning algorithm. This may provide for an effective solution in certain states.

The method may comprise determining a group of states of the environment in which the one or more actions deduced by the centralised critic result in a greater expected reward than the one or more actions deduced by the decentralised critic. This can guide the selection of an efficient critic in a given situation.

The method may comprise determining a group of states of the environment in which the one or more actions deduced by the decentralised critic result in a greater expected reward than the one or more actions deduced by the centralised critic. This can guide the selection of an efficient critic in a given situation.

The method may comprise biasing the switching machine learning algorithm towards selecting the decentralised critic for deducing the one or more actions unless the current state belongs to the determined group of states in which the centralised critic deduces actions resulting in a greater expected reward than the decentralised critic. This may allow the effectiveness of the decentralised critic to be assessed or preserved unless the centralised critic is observed to perform in an advantageous way for certain states.

The method may comprise, upon selecting the centralised critic, the switching machine learning algorithm being configured to continue selecting the centralised critic to deduce further actions for a predetermined period before it is permitted to select the decentralised critic. The predetermined period may be defined by a total consecutive number of actions deduced by the centralised critic. This may allow the effectiveness of the centralised critic to be assessed or preserved for certain states.

The method may comprise training the decentralised critic with an independent learning algorithm. This may provide for an effective solution in certain states.

The method may comprise training the centralised critic with a centralised training - decentralised execution (CT-DE) algorithm. Such an algorithm can be efficient in certain states.

The method may comprise the selecting of the decentralised critic being biased by increasing or decreasing the determined expected reward associated with the next state as a consequence of executing the deduced action output by the decentralised critic. This can reinforce the identification of effective solutions.

### BRIEF DESCRIPTION OF THE DRAWINGS

The present invention will now be described by way of example with reference to the accompanying drawings.

In the drawings:
Figure 1 shows a computer system suitable for implementing the present invention.
Figure 2 shows a simple example of a situation where the present invention may be advantageous.
Figure 3 shows an example algorithm.

### DETAILED DESCRIPTION

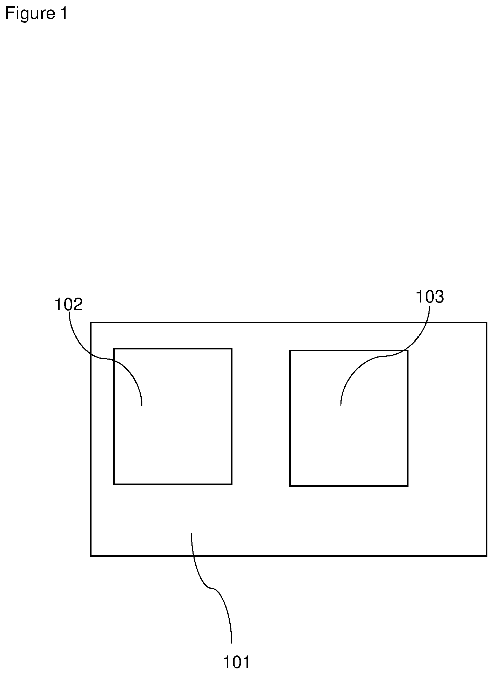

Figure 1 shows a computing system 101 comprising a processing entity 102 and a program store 103. The processing entity 102 comprises one or more processors. The program store 103 stores in non-transient form program code executable by the processing entity 102 to perform the algorithmic functions described herein. The computing system 101 may be a single computer or multiple computers. It may be in a single location or distributed between multiple locations.

Multi-agent reinforcement learning involves modelling the behaviour of multiple agents so as to adaptively identify an optimal policy for the behaviour of such agents. Typically, a reward function is defined which reinforces advantageous agent behaviour and/or penalises disadvantageous agent behaviour. Agents' behaviour can be adapted in dependence on the reward function to push the system towards a solution that tends to a maximised expected return. Cooperative multi-agent reinforcement learning is a powerful tool that enables autonomous agents to solve various tasks such as autonomous driving and swarm robotics. Central to solving such problems is the task of finding the joint optimal policy to be executed by the multiple agents. Unlike single-agent reinforcement learning, multi-agent systems often require agents to coordinate to successfully solve the tasks. Consequently, often agents must base their decisions on the actions of other agents, which means that solving such problems can be extremely expensive and often intractable. Currently, many MARL algorithms impose strong restrictions to enable tractability, e.g. monotonicity (QMIX methods), and homogeneity (mean-field methods). These conditions are often violated outside of idealised environments. As solving these systems often requires coordination between agents, agents often need to observe each other during training to account for other agents' influence on the system.

The goal of MARL learner is to maximise some reward that depends on both the state and actions of all agents. Centralised learners have a critic that construct estimates of the future rewards based on all agents' observed actions. Accounting for other agents' actions while estimating the return from any given action helps agents determine the correct action given the actions of others. This is crucial for environments that require agents to coordinate. However, as mentioned above, this procedure is very computationally expensive and can bottle-neck MARL. The growth in complexity due to the number of samples needed to determine the best action is combinatorial to the number of agents. To provide tractability for large systems centralised learning methods sometimes employ strong structural assumptions (e.g. monotonicity). This can often be unnecessary since other agents do not always have a major influence on what is the optimal action for another agent.

Decentralised learners can have a critic that does not account for the actions of other agents. The agents' estimate of their returns or expected rewards thus ignores the explicit effect of the other agents' actions. This means that learning can be very fast. Also, these algorithms are fast to tune and can directly leverage many of the methods in single-agent RL, e.g. TRPO. In some settings, decentralised learners can be much faster to learn than centralised learners. Decentralised learners also do not have the structural assumptions which can prevent learning. However, independent decentralised learners often fail catastrophically to learn to solve certain tasks since multi-agent systems often require coordination. Accounting for other agents' actions while estimating the return from any given action helps agents understand what the correct action is given the actions of others.

As discussed above, in MARL, centralised and decentralised approaches to training and corresponding algorithms are known to have certain benefits and advantages. However, determining which of these types of algorithms is best for learning to solve the task is not well understood. In a given system, IL may perform well in some parts while failing catastrophically elsewhere. The approach to be described below synthesises decentralised and centralised learners.

In one example the present approach involves a centralised critic network: "Central", a decentralised critic network: "Decentral" and, an adaptive reinforcement learning agent "Global". The networks and the agent may be implemented by a suitable computing system. The functions of the entities are as follows. The adaptive RL agent "Global" determines the set of states in which the centralised critic network Central is to be used. In other states the decentralised network Decentral is to be used. That approach may treat Decentral as the default state. In other approaches Central may be the default state, or there may be a third default state that is neither Central nor Decentral.

The present framework has a combination of RL and switching controls. That combination enables the present framework to determine the best, or at least a preferred, set of states to learn using Central.

By having both centralised and decentralised approaches available and selecting between them in this way, the benefits of both algorithm classes are available and some of the major hurdles presented by using solely an algorithm in one class can be overcome. The framework may adopt any MARL algorithm, depending on the situation.

As indicated above, there are two critic networks. One network comprises or more preferably consists of one or more centralised learning functions. The other network comprises or more preferably consists of one or more decentralised learning functions. A reinforcement learning process which employs switching controls determines the set of states in which one form of learning (e.g. centralised) is required. The other form of learning (e.g. decentralised) is used in other states. It has been found that this can lead to an efficient MARL process in which e.g. centralised learning (CL) is used only when needed and the benefits of DL can be leveraged in the other states.

The present system may be used in MARL environments. Such a context is usually described or defined as follows: a collection of N decision-making agents observe a state of an environment *sₜ* at time-step *t*. Given this observation, each agent *i* samples its respective policy to select an action ${a}_{t}^{i} ∼ {π}^{i} \left(⋅\left|{s}_{t}\right.\right)$*.* The collection of all agents' actions forms a joint-action ***a**ₜ,* and actuating this joint-action in the environment results in the environment emitting a joint reward ***r**ₜ*∼*R*(*sₜ, **a**ₜ*) and transitioning to a new state *s*_{*t+*1}*~P*(*sₜ, **a**ₜ, s*_{*t+*1})*.* The present system may further be used in fully-cooperative MARL environments. In fully-cooperative MARL each agent receives a reward of ***r**ₜ ·* **1** (thus the reward for each agent is the sum of all the agents' rewards); and the goal of the collection of agents is to optimise the expected long-term sum of rewards. In summary, the settings provide an environment *E* (which has a set of states *S*, allowed actions A, a reward function r, and transition dynamics *P*), and a collection of decision making agents with joint-policy ***π***.

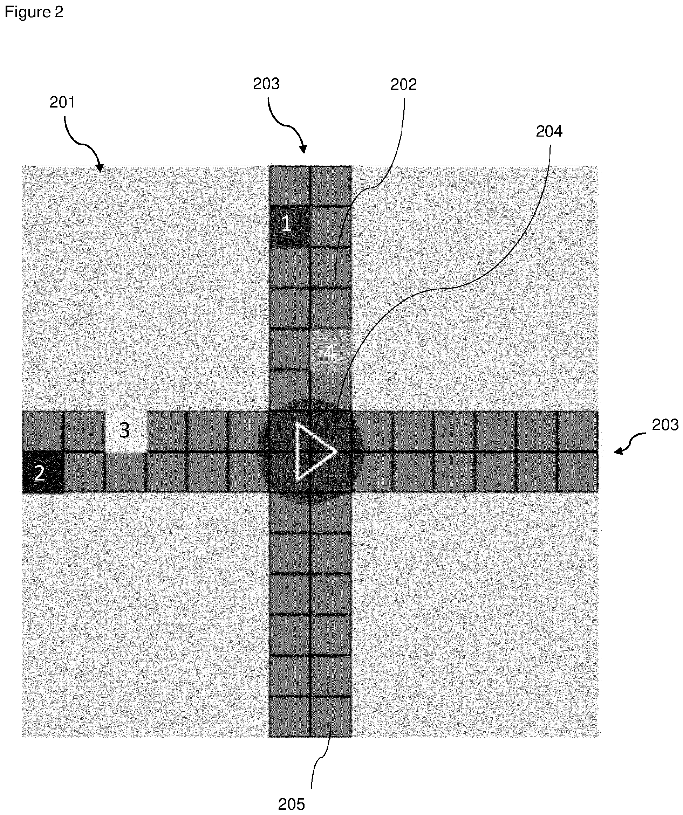

For illustration of these concepts, a simple example of a MARL environment 201 is shown in Figure 2. This is a traffic junction in which agents 202 are represented by squares. The squares can move on orthogonal roads 203. The state of the environment consists of the locations of the agent 202 squares on the roads 203 at any given time. Each agent's 202 action at an iteration is to either move forward or stand still. The so-called joint-action consists of the collection of these actions. A reward function in this MARL example rewards forward movement of an agent 202 and severely penalises accidents where the roads 203 intersect 204. By modelling this system a MARL algorithm may learn a set of functions or behaviours for agents 202 which can best satisfy the reward function. In a fully-cooperative MARL model the best solution will favour the greatest total forward motion and avoidance of crashes. The approach to solving the junction example depends on the type of learning critic used. Leading up to the intersection a decentralised critic can be quick to guide learning towards the optimal policy as other agent's actions do not need to be considered. However, a Centralised critic may be slow to learn as it unnecessarily accounts for other drivers' actions. At the intersection a centralised critic accounts for other drivers' actions and thus enables coordination which is needed. However, a decentralised critic does not promote coordination as it attempts to predict the actions of other agents which are based on their own exploration choices and thus fundamentally random. As a consequence, RL agents collide with high probability when using decentralised learning to navigate the centre of the junction.

As indicated above, the present system uses the entities termed Global, Central, and Decentral. The RL agent Global determines at which states to use Central and which to use Decentral. Global is therefore responsible for determining a policy g whose action set consists of the binary choice: (i) use Central or (ii) use Decentral.

Central is a MARL joint-policy π^{c} that is specifically trained according to the Centralised Training-Decentralised Execution (CT-DE) paradigm. That is, during training, the MARL algorithm used for optimising the policy is allowed to use full information of the state of the environment, as well as all agents' 202 actions.

Decentral is a MARL joint-policy π^{d} trained using independent learning (IL). That is, each of the N agent's 202 policies are optimised oblivious to the other agents' 202 actions. This can be considered to make the multi-agent setting effectively a single agent 202 from each agent's 202 ego-centric point-of-view.

These additional components are used as follows. At each time-step, Global first observes the state of the environment sₜ. Given this state, it samples an action from its binary choice: use Central or use Decentral. If Global chooses to use Central, then the critic Central is used to deduce a joint-action ${a}_{t}^{c}$ for the environment, and this action is effected in the environment. Conversely, if Global chooses to use Decentral, a joint-action ${a}_{t}^{d}$ is deduced by the critic Decentral and this action is actuated in the environment. At each time-step a joint-action is sampled from exactly one of Central or Decentral. It should be appreciated that in some embodiments, depending on the specific MARL algorithm being used, the centralised or decentralised critic deduces the relevant action by having an indirect effect on how actions are chosen. That is, the centralised or decentralised critic influences the selection of the action, but does not determine it directly. However, in other embodiments the centralised or decentralised critic may deduce the action by determining the relevant action in a direct manner.

Global uses a switching control mechanism with which it learns to activate Central only at the set of states in which using Central leads to an increase in reward. Global's policy space has a form of policies known as switching controls. These enable Global to decide at which states to switch to centralised learning. At each state Global first makes a binary decision to switch to centralised learning. {T_{K}}ₖ>_{0 are times that a switch} will take place. For example if the switch is first turned on at the state s₅ then turned off at s₇ the T₁ = 5 and T₂ = 7. At any state the decision to activate Central is driven by a policy defined so as to act according to Global's objective. In particular, first Global makes an observation of a state and the joint action of the agents. Using Global's policy Global decides whether to activate Central. The switching times are rules that depend on the state of the environment.

In the above example it is assumed that Decentral is used if Central is not activated, making Decentral the default choice for learning the optimal next action based on the current state. In this case, Global may pay a cost whenever it chooses learning through Central. The task for Global is to decide the optimal subset of states in which it should let Central determine the learning process. Such a default setting can avoid unnecessary use of Central where it's use may not provide significant enough of an advantage over Decentral to offset its associated disadvantages. However, depending on the setting the default critic may be Central.

In the context of the above junction example: Leading up to the intersection Global uses the decentralised critic to enable fast and efficient learning. At the intersection Global uses the centralised critic to enable coordination between the agents to traverse the intersection without colliding.

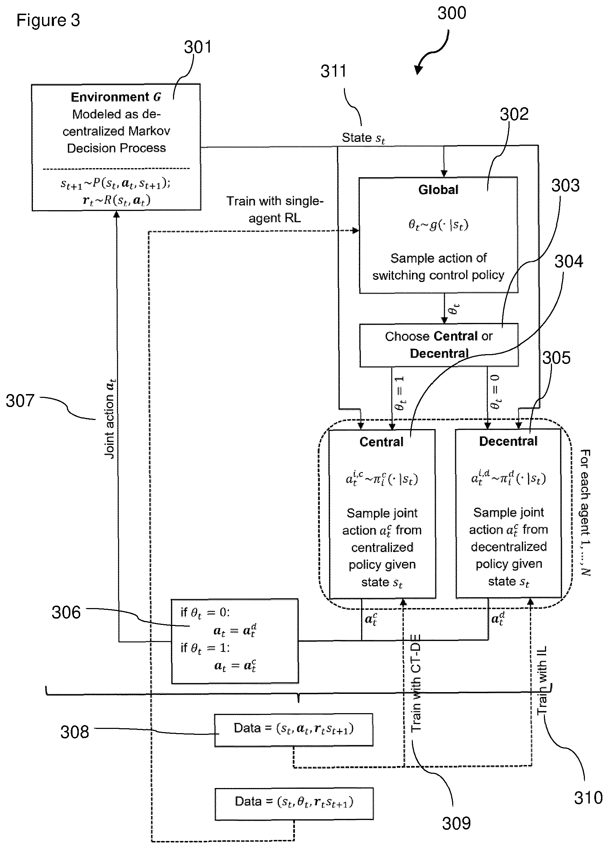

This procedure 300 is illustrated in the following chronology and Figure 3. Given environment G 301, policies g, π^{c} and π^{d} for Global algorithm 302, and Central 304, and Decentral 305 critics respectively.
1 The state 311 of the environment 301 at time-step t, st, is input to the Global switching algorithm and policy 302.
2 Global's 302 policy is sampled θₜ*∼*g(· |sₜ) to determine 303 whether the centralised critic Central 304 and corresponding policy, or the decentralised critic Decentral 305 and corresponding policy will be used at time-step t.
3 Choose action 307 from one of the multi-agent policies 306:
   3.1 If θₜ = 0 (0 indicates use Decentral), st is input to the policy Decentral 305, which generates actions ${a}_{t}^{i} ∼ {π}_{i}^{d} \left(⋅\left|{s}_{t}\right.\right)$ for each agent 202 in environment yielding joint-action at .
   3.2 If θₜ = 1 (1 indicates use Central), st is input to the policy Central 304, which generates actions ${a}_{t}^{i} ∼ {π}_{i}^{c} \left(⋅\left|{s}_{t}\right.\right)$ for each agent 202 in environment yielding joint-action aₜ.
4 Execute at in the environment 301, sₜ₊₁~P(sₜ, aₜ, sₜ₊₁); rₜ*∼*R(sₜ, aₜ).
5 Train Global 302, Central 304, and Decentral 305 on (sₜ, aₜ, rₜ, sₜ₊₁) 308.

Illustrating this operation with reference to the environment 201 of Figure 2, when the agents 202 are near starting positions 205 far away from the centre junction 204, each agent 202 can act independently of the behaviour of the other agents 202. In these states 311 Global 302 can be expected to choose Decentral 305 as the joint-action policy from which to deduce the optimal joint-action. Conversely, for states 311 when one or more agents 202 are near the junction 204, coordination between the agents 202 is important in order to avoid collisions. Here Global 302 can be expected to choose Central 304 as the join-action policy from which to deduce the optimal joint-action.

Put another way, Global is responsible for choosing which of the two MARL critics Central and Decentral is better suited for training a policy at a given state st of the environment. The policy as trained may then provide an action to be executed when a specific state of the environment is encountered. Any suitable single-agent reinforcement learning algorithm may be used to learn Global's policy. Examples include proximal policy optimisation (PPO) and soft actor-critic (SAC).

Central 304 may conveniently be trained using the CT-DE Paradigm 309. Central 304 may seek to model the best joint-action considering the other agents' 202 policies. To learn Central 304 CT-DE 309 algorithms or structures such as QMIX or multi-agent proximal policy optimisation (MAPPO) may be used.

Decentral 305 seeks to simply model the agent-wise best action without consideration of the overall best joint-action. To learn Decentral 305 independent learning algorithms such as independent Q-learning (IQL) 310 may be used.

That is, Global is a switching machine learning algorithm for generating a policy for performing one or more tasks to be executed by a control module of a system. The switching machine learning algorithm is trained according to a multi-critic learning framework. The multi-critic learning framework comprises a centralised critic and a decentralised critic, where the switching machine learning algorithm is trained to control switching between the centralised critic and the decentralised critic for determining one or more actions. The method for training comprises a step of providing the current state of the environment to the switching machine learning algorithm, selecting by the switching machine learning algorithm either the centralised or decentralised critic for use in determining the one or more actions, inputting the current state into the selected critic, evaluating an action output by the selected critic to determine an expected reward associated with the next state as a consequence of executing the action, and providing the current state, the selected critic, and the expected reward to the switching machine learning algorithm.

The switching machine learning algorithm can thus decide which of the actions deduced by the selected critic provides the optimal expected reward. This may involve evaluating the action output by only one of the centralised critic, or the decentralised critic, or both critics. Once an optimal action is deduced, the global policy can indicate that for such a state a specific one of the two critics should be used to deduce the action to be executed. The action to be executed may then also be added to a further policy for performing one or more tasks to be executed by a control module of the system or of a single device. Thus, in the process of training the switching machine learning algorithm a policy for selecting the appropriate critic and a policy for specifying the appropriate action for the control module may be generated. These policies may be trained simultaneously.

The critics can be trained while the switching machine learning algorithm is trained. The method of training may comprise providing the current state, the deduced action, and the expected reward for the next state to the respective selected critic. Additionally or alternatively, these outputs may be provided to both critics, and not just the selected critic. As such, both critics can observe and make use of the reward feedback from the state of the environment given a joint action and observation of a resulting state. Thus, the method may comprise providing the current state, the deduced action, and the expected reward for the next state to both the centralised and decentralised critic irrespective of which critic deduced the action.

The training may comprise determining a group of states of the environment where the one or more actions deduced by the decentralised critic result in a greater expected reward than the one or more actions deduced by the centralised critic. Additionally or alternatively, the training may comprise determining a group of states of the environment where the one or more actions deduced by the centralised critic result in a greater expected reward than the one or more actions deduced by the decentralised critic. Thus, every state may belong to one of two groups of states where the decentralised or centralised critic respectively is used to deduce the action leading to the next state. In the situation where one critic is the default critic, only one of these two groups indicating when to switch to the other, non-default critic may need to be determined.

A default critic may be implemented by biasing the switching machine learning algorithm towards selecting the default critic. That is, for example, the training may comprise biasing the switching machine learning algorithm towards selecting the decentralised critic for deducing the one or more actions unless the current state belongs to the determined group of states where the centralised critic deduces actions resulting in a greater expected reward than the decentralised critic. This biasing may be implemented by configuring the switching machine learning algorithm to continue selecting the centralised critic to deduce further actions for a predetermined period before it is permitted to select the decentralised critic. The predetermined period may be defined by a total consecutive number of actions deduced by the centralised critic, or the predetermined period may be a period of time, or the predetermined period may be a number of clock cycles. The selection may also be biased by increasing or decreasing the determined expected reward associated with the next state as a consequence of executing the deduced action output by the decentralised critic. That is, the expected reward may be numerically altered to weight the selection of a particular critic for certain states. For example, for certain states where it is known that one critic should be used instead of the other, even if the expected reward is numerically similar.

The switching machine learning algorithm comprises a policy for switching between a centralised critic and a decentralised critic for deducing one or more actions to be performed by one or more agents within an environment. A policy stipulating the actions to be performed by the agent in any given state to solve a particular task is also determined. The one or more agents may be referred to as a system. The actions of the one or more agents may be controlled by one or more control modules. The above-described training method therefore provides a device comprising a control module. The control module is configured to implement a policy for performing one or more tasks optimised according to a switching machine learning algorithm. The switching machine learning algorithm is trained according to a multi-critic learning framework. The multi-critic learning framework comprises a centralised critic and a decentralised critic, and the switching machine learning algorithm controls switching between the centralised critic and the decentralised critic for deducing one or more actions to be performed. The switching machine learning algorithm may comprise an adaptive reinforcement learning machine learning algorithm.

The policy for performing one or more tasks is optimised to perform tasks according to the switching algorithm and the selected critic. For example, the policy for performing one or more tasks may be optimised to perform tasks according to the one or more actions deduced by the decentralised critic unless the current state belongs to the determined group of states where the one or more actions deduced by the centralised critic result in a greater expected reward than the one or more actions deduced by the decentralised critic. The policy for performing one or more tasks may be optimised according to the method of training as described in any of claims 2 to 13.

## Claims

1. A device (101) comprising a control module, the control module configured to implement a policy for performing one or more tasks optimised according to a switching machine learning algorithm; the switching machine learning algorithm trained according to a multi-critic learning framework (300), the multi-critic learning framework comprising a centralised critic (304) and a decentralised critic (305), where the switching machine learning algorithm controls switching (303) between the centralised critic and the decentralised critic for deducing one or more actions to be performed by one or more agents (202) within an environment, and wherein the one or more tasks comprise at least one of autonomous driving and swarm robotics;
wherein the one or more agents (202) can move on orthogonal roads (203) of a traffic junction, a state of the environment consists of locations of the one or more agents (202) on the roads (203) at any given time, each agent's (202) action at an iteration is to either move forward or stand still, and a reward function rewards forward movement of an agent (202) and penalises accidents where the roads (203) intersect (204);
wherein the switching machine learning algorithm comprises an adaptive reinforcement learning machine learning algorithm;
wherein the switching machine learning algorithm is arranged to determine a group of states of the environment in which the one or more actions deduced by the centralised critic result in a greater expected reward than the one or more actions deduced by the decentralised critic;
wherein the policy for performing one or more tasks is optimised to perform tasks according to the one or more actions deduced by the decentralised critic unless the current state belongs to the determined group of states in which the one or more actions deduced by the centralised critic result in a greater expected reward than the one or more actions deduced by the decentralised critic;
wherein the adaptive reinforcement learning machine learning algorithm uses a switching control mechanism with which it learns to activate the centralised critic only at the group of states of the environment in which the one or more actions deduced by the centralised critic result in a greater expected reward than the one or more actions deduced by the decentralised critic; and
wherein the decentralised critic is used if the centralised critic is not activated.

2. A method of training a switching machine learning algorithm (302) for generating a policy for performing one or more tasks to be executed by the control module of the device (101) of claim 1, wherein the one or more tasks comprise at least one of autonomous driving and swarm robotics, the method comprising:
providing the current state (311) of the environment to the switching machine learning algorithm;
selecting (303) by the switching machine learning algorithm either the centralised or decentralised critic for use in deducing the one or more actions;
inputting the current state (311) into the selected critic (304), (305);
evaluating an action deduced (307) by the selected critic to determine an expected reward associated with the next state as a consequence of executing the action; and
providing the current state, the selected critic, and the expected reward to the switching machine learning algorithm.

3. The method according to claim 2, wherein the method comprises providing (308) the current state, the deduced action, and the expected reward for the next state to the respective selected critic.

4. The method according to claim 2, wherein the method comprises providing (308) the current state, the deduced action, and the expected reward for the next state to both the centralised and decentralised critic irrespective of which critic deduced the action.

5. The method according to any of claims 2 to 4, wherein the method comprises training the switching machine learning algorithm with the adaptive reinforcement learning machine learning algorithm.

6. The method according to any of claims 2 to 5, wherein the method comprises determining a group of states of the environment in which the one or more actions deduced by the centralised critic result in a greater expected reward than the one or more actions deduced by the decentralised critic.

7. The method according to any of claims 2 to 5, wherein the method comprises determining a group of states of the environment in which the one or more actions deduced by the decentralised critic result in a greater expected reward than the one or more actions deduced by the centralised critic.

8. The method according to claim 6, wherein the method comprises biasing the switching machine learning algorithm towards selecting the decentralised critic for deducing the one or more actions unless the current state belongs to the determined group of states in which the centralised critic deduces actions resulting in a greater expected reward than the decentralised critic.

9. The method according to any of claims 2 to 8, wherein upon selecting the centralised critic, the switching machine learning algorithm is configured to continue selecting the centralised critic to deduce further actions for a predetermined period before it is permitted to select the decentralised critic.

10. The method according to claim 9, wherein the predetermined period is defined by a total consecutive number of actions deduced by the centralised critic.

11. The method according to any of claims 2 to 10, wherein the method comprises training the decentralised critic with an independent learning algorithm (310).

12. The method according to any of claims 2 to 11, wherein the method comprises training the centralised critic with a Centralised Training-Decentralised Execution, CT-DE, structure (309).

13. The method according to claim 8, wherein the selecting of the decentralised critic is biased by increasing or decreasing the determined expected reward associated with the next state as a consequence of executing the deduced action output by the decentralised critic.

## Patentansprüche

1. Vorrichtung (101), umfassend ein Steuermodul, wobei das Steuermodul dazu konfiguriert ist, eine Richtlinie zum Durchführen einer oder mehrerer Aufgaben, die gemäß einem Schaltalgorithmus für maschinelles Lernen optimiert sind, umzusetzen; wobei der Schaltalgorithmus für maschinelles Lernen gemäß einem Rahmenkonzept (300) für das Lernen mit Multikritikern trainiert ist, wobei das Rahmenkonzept für das Lernen mit Multikritikern einen zentralisierten Kritiker (304) und einen dezentralisierten Kritiker (305) umfasst, wobei der Schaltalgorithmus für maschinelles Lernen Schalten (303) zwischen dem zentralisierten Kritiker und dem dezentralisierten Kritiker steuert, um eine oder mehrere Aktionen abzuleiten, die durch einen oder mehrere Agenten (202) innerhalb einer Umgebung durchzuführen sind, und wobei die eine oder die mehreren Aufgaben mindestens eines von autonomem Fahren und Schwarmrobotik umfassen;
wobei sich ein oder mehrere Agenten (202) auf orthogonalen Straßen (203) eines Verkehrsknotenpunkts bewegen können, ein Zustand der Umgebung aus Positionen des einen oder der mehreren Agenten (202) auf den Straßen (203) zu jedem Zeitpunkt besteht, die Aktion jedes Agenten (202) bei einer Iteration darin besteht, sich entweder vorwärts zu bewegen oder stillzustehen, und eine Belohnungsfunktion eine Vorwärtsbewegung eines Agenten (202) belohnt und Unfälle, dort wo sich die Straßen (203) kreuzen (204), bestraft;
wobei der Schaltalgorithmus für maschinelles Lernen einen adaptiven Verstärkungslernalgorithmus für maschinelles Lernen umfasst;
wobei der Schaltalgorithmus für maschinelles Lernen dazu ausgelegt ist, eine Gruppe von Zuständen der Umgebung zu bestimmen, in denen die eine oder die mehreren Aktionen, die durch den zentralisierten Kritiker abgeleitet werden, zu einer höheren erwarteten Belohnung führen als die eine oder die mehreren Aktionen, die durch den dezentralisierten Kritiker abgeleitet werden;
wobei die Richtlinie zum Durchführen einer oder mehrerer Aufgaben dazu optimiert ist, Aufgaben gemäß der einen oder den mehreren Aktionen, die durch den dezentralisierten Kritiker abgeleitet werden, durchzuführen, es sei denn, der aktuelle Zustand gehört zu der bestimmten Gruppe von Zuständen, in denen die eine oder die mehreren Aktionen, die durch den zentralisierten Kritiker abgeleitet werden, zu einer höheren erwarteten Belohnung führen als die eine oder die mehreren Aktionen, die durch den dezentralisierten Kritiker abgeleitet werden;
wobei der adaptive Verstärkungslernalgorithmus für maschinelles Lernen einen Schaltsteuermechanismus verwendet, mit dem er lernt, den zentralisierten Kritiker nur in der Gruppe von Zuständen der Umgebung zu aktivieren, in denen die eine oder die mehreren Aktionen, die durch den zentralisierten Kritiker abgeleitet werden, zu einer höheren erwarteten Belohnung führen als die eine oder die mehreren Aktionen, die durch den dezentralisierten Kritiker abgeleitet werden; und
wobei der dezentralisierte Kritiker verwendet wird, wenn der zentralisierte Kritiker nicht aktiviert ist.

2. Verfahren zum Trainieren eines Schaltalgorithmus (302) für maschinelles Lernen zum Erzeugen einer Richtlinie zum Durchführen einer oder mehrerer Aufgaben, die durch das Steuermodul der Vorrichtung (101) nach Anspruch 1 auszuführen sind, wobei die eine oder die mehreren Aufgaben mindestens eines von autonomem Fahren und Schwarmrobotik umfassen, wobei das Verfahren Folgendes umfasst:
Bereitstellen des aktuellen Zustands (311) der Umgebung für den Schaltalgorithmus für maschinelles Lernen;
Auswählen (303), durch den Schaltalgorithmus für maschinelles Lernen, entweder des zentralisierten oder des dezentralisierten Kritikers zur Verwendung beim Ableiten der einen oder der mehreren Aktionen;
Eingeben des aktuellen Zustands (311) in den ausgewählten Kritiker (304), (305);
Bewerten einer Aktion, die durch den ausgewählten Kritiker abgeleitet (307) wird, um eine erwartete Belohnung zu bestimmen, die mit dem nächsten Zustand als eine Folge des Ausführens der Aktion verbunden ist; und
Bereitstellen des aktuellen Zustands, des ausgewählten Kritikers und der erwarteten Belohnung für den Schaltalgorithmus für maschinelles Lernen.

3. Verfahren nach Anspruch 2, wobei das Verfahren Bereitstellen (308) des aktuellen Zustands, der abgeleiteten Aktion und der erwarteten Belohnung für den nächsten Zustand an den jeweils ausgewählten Kritiker umfasst.

4. Verfahren nach Anspruch 2, wobei das Verfahren Bereitstellen (308) des aktuellen Zustands, der abgeleiteten Aktion und der erwarteten Belohnung für den nächsten Zustand sowohl für den zentralisierten als auch für den dezentralisierten Kritiker umfasst, unabhängig davon, welcher Kritiker die Aktion abgeleitet hat.

5. Verfahren nach einem der Ansprüche 2 bis 4, wobei das Verfahren Trainieren des Schaltalgorithmus für maschinelles Lernen mit dem adaptiven Verstärkungslernalgorithmus für maschinelles Lernen umfasst.

6. Verfahren nach einem der Ansprüche 2 bis 5, wobei das Verfahren Bestimmen einer Gruppe von Zuständen der Umgebung umfasst, in denen die eine oder die mehreren Aktionen, die durch den zentralisierten Kritiker abgeleitet werden, zu einer höheren erwarteten Belohnung führen als die eine oder die mehreren Aktionen, die durch den dezentralisierten Kritiker abgeleitet werden.

7. Verfahren nach einem der Ansprüche 2 bis 5, wobei das Verfahren Bestimmen einer Gruppe von Zuständen der Umgebung umfasst, in denen die eine oder die mehreren Aktionen, die durch den dezentralisierten Kritiker abgeleitet werden, zu einer höheren erwarteten Belohnung führen als die eine oder die mehreren Aktionen, die durch den zentralisierten Kritiker abgeleitet werden.

8. Verfahren nach Anspruch 6, wobei das Verfahren Beeinflussen des Schaltalgorithmus für maschinelles Lernen in Richtung Auswählen des dezentralisierten Kritikers zum Ableiten der einen oder der mehreren Aktionen umfasst, es sei denn, der aktuelle Zustand gehört zu der bestimmten Gruppe von Zuständen, in denen der zentralisierte Kritiker Aktionen ableitet, die zu einer höheren erwarteten Belohnung führen als der dezentralisierte Kritiker.

9. Verfahren nach einem der Ansprüche 2 bis 8, wobei der Schaltalgorithmus für maschinelles Lernen nach dem Auswählen des zentralisierten Kritikers, dazu konfiguriert ist, Auswählen des zentralisierten Kritikers fortzusetzen, um weitere Aktionen für einen vorbestimmten Zeitraum abzuleiten, bevor er den dezentralisierten Kritiker auswählen darf.

10. Verfahren nach Anspruch 9, wobei der vorbestimmte Zeitraum durch eine Gesamtzahl von aufeinanderfolgenden Aktionen, die durch den zentralisierten Kritiker abgeleitet werden, definiert wird.

11. Verfahren nach einem der Ansprüche 2 bis 10, wobei das Verfahren Trainieren des dezentralisierten Kritikers mit einem unabhängigen Lernalgorithmus (310) umfasst.

12. Verfahren nach einem der Ansprüche 2 bis 11, wobei das Verfahren Trainieren des zentralisierten Kritikers mit einer Struktur (309) für zentralisiertes Trainieren und dezentralisierte Ausführung, CT-DE-Struktur, umfasst.

13. Verfahren nach Anspruch 8, wobei das Auswählen des dezentralisierten Kritikers durch Erhöhen und Verringern der bestimmten erwarteten Belohnung, die mit dem nächsten Zustand als eine Folge des Ausführens der abgeleiteten Aktion, die durch den dezentralisierten Kritiker ausgegeben wird, verbunden ist, beeinflusst wird.

## Revendications

1. Dispositif (101) comprenant un module de commande, le module de commande étant configuré pour mettre en œuvre une politique de réalisation d'une ou plusieurs tâches optimisées selon un algorithme d'apprentissage automatique de commutation ; l'algorithme d'apprentissage automatique de commutation étant entraîné selon un cadre d'apprentissage multicritique (300), le cadre d'apprentissage multicritique comprenant un critique centralisé (304) et un critique décentralisé (305), où l'algorithme d'apprentissage automatique de commutation contrôle la commutation (303) entre le critique centralisé et le critique décentralisé pour déduire une ou plusieurs actions devant être réalisées par un ou plusieurs agents (202) dans un environnement, et dans lequel les une ou plusieurs tâches comprennent au moins l'un des éléments suivants : la conduite autonome ou la robotique en essaim ;
dans lequel les un ou plusieurs agents (202) peuvent se déplacer sur des routes orthogonales (203) d'un carrefour, un état de l'environnement est composé des emplacements des un ou plusieurs agents (202) sur les routes (203) à un quelconque moment donné, l'action de chaque agent (202) à une itération consiste soit à avancer, soit à rester immobile, et une fonction de récompense récompense le mouvement vers l'avant d'un agent (202) et pénalise les accidents là où les routes (203) se croisent (204) ; dans lequel l'algorithme d'apprentissage automatique de commutation comprend un algorithme d'apprentissage automatique par renforcement adaptatif ;
dans lequel l'algorithme d'apprentissage automatique de commutation est agencé pour déterminer un groupe d'états de l'environnement dans lesquels les une ou plusieurs actions déduites par le critique centralisé entraînent une récompense attendue plus élevée que les une ou plusieurs actions déduites par le critique décentralisé ;
dans lequel la politique de réalisation d'une ou plusieurs tâches est optimisée pour réaliser les tâches selon les une ou plusieurs actions déduites par le critique décentralisé, sauf si l'état actuel appartient au groupe déterminé d'états dans lesquels les une ou plusieurs actions déduites par le critique centralisé entraînent une récompense attendue plus élevée que les une ou plusieurs actions déduites par le critique décentralisé ;
dans lequel l'algorithme d'apprentissage automatique par renforcement adaptatif utilise un mécanisme de commande de commutation grâce auquel il apprend à activer le critique centralisé uniquement dans le groupe d'états de l'environnement dans lesquels les une ou plusieurs actions déduites par le critique centralisé entraînent une récompense attendue plus élevée que les une ou plusieurs actions déduites par le critique décentralisé ; et
dans lequel le critique décentralisé est utilisé si le critique centralisé n'est pas activé.

2. Procédé d'entraînement d'un algorithme d'apprentissage automatique de commutation (302) pour générer une politique de réalisation d'une ou plusieurs tâches devant être exécutées par le module de commande du dispositif (101) selon la revendication 1, dans lequel les une ou plusieurs tâches comprennent au moins l'un des éléments suivants : la conduite autonome et la robotique en essaim, le procédé comprenant :
la fourniture de l'état actuel (311) de l'environnement à l'algorithme d'apprentissage automatique de commutation ;
la sélection (303), par l'algorithme d'apprentissage automatique de commutation, du critique centralisé ou du critique décentralisé à utiliser pour la déduction des une ou plusieurs actions ;
l'entrée de l'état actuel (311) dans le critique sélectionné (304), (305) ;
l'évaluation d'une action déduite (307) par le critique sélectionné pour déterminer une récompense attendue associée à l'état suivant en conséquence de l'exécution de l'action ; et
la fourniture de l'état actuel, du critique sélectionné et de la récompense attendue à l'algorithme d'apprentissage automatique de commutation.

3. Procédé selon la revendication 2, dans lequel le procédé comprend la fourniture (308) de l'état actuel, de l'action déduite et de la récompense attendue pour l'état suivant au critique sélectionné respectif.

4. Procédé selon la revendication 2, dans lequel le procédé comprend la fourniture (308) de l'état actuel, de l'action déduite et de la récompense attendue pour l'état suivant à la fois au critique centralisé et au critique décentralisé indépendamment du critique qui a déduit l'action.

5. Procédé selon l'une quelconque des revendications 2 à 4, dans lequel le procédé comprend l'entraînement de l'algorithme d'apprentissage automatique de commutation avec l'algorithme d'apprentissage automatique d'apprentissage par renforcement adaptatif.

6. Procédé selon l'une quelconque des revendications 2 à 5, dans lequel le procédé comprend la détermination d'un groupe d'états de l'environnement dans lesquels les une ou plusieurs actions déduites par le critique centralisé entraînent une récompense attendue plus élevée que les une ou plusieurs actions déduites par le critique décentralisé.

7. Procédé selon l'une quelconque des revendications 2 à 5, dans lequel le procédé comprend la détermination d'un groupe d'états de l'environnement dans lesquels les une ou plusieurs actions déduites par le critique décentralisé entraînent une récompense attendue plus élevée que les une ou plusieurs actions déduites par le critique centralisé.

8. Procédé selon la revendication 6, dans lequel le procédé comprend le fait de biaiser l'algorithme d'apprentissage automatique de commutation vers la sélection du critique décentralisé pour déduire les une ou plusieurs actions sauf si l'état actuel appartient au groupe déterminé d'états dans lesquels le critique centralisé déduit des actions entraînant une récompense attendue plus élevée que le critique décentralisé.

9. Procédé selon l'une quelconque des revendications 2 à 8, dans lequel lors de la sélection du critique centralisé, l'algorithme d'apprentissage automatique de commutation est configuré pour continuer à sélectionner le critique centralisé pour déduire d'autres actions pendant une période prédéterminée avant d'être autorisé à sélectionner le critique décentralisé.

10. Procédé selon la revendication 9, dans lequel la période prédéterminée est définie par un nombre total consécutif d'actions déduites par le critique centralisé.

11. Procédé selon l'une quelconque des revendications 2 à 10, dans lequel le procédé comprend l'entraînement du critique décentralisé avec un algorithme d'apprentissage indépendant (310).

12. Procédé selon l'une quelconque des revendications 2 à 11, dans lequel le procédé comprend l'entraînement du critique centralisé avec une structure d'apprentissage centralisé avec exécution décentralisée, CT-DE (309).

13. Procédé selon la revendication 8, dans lequel la sélection du critique décentralisé est biaisée en augmentant ou en diminuant la récompense attendue déterminée associée à l'état suivant en conséquence de l'exécution de la sortie d'action déduite par le critique décentralisé.
